# EUROPEAN PATENT APPLICATION

(11) **EP 4 099 238 A1**
(43) Date of publication of application: **07.12.2022**
(21) Application number: 21176881.7
(22) Date of filing: 31.05.2021
(51) Int. Cl.: G06Q 10/04, G06Q 10/06

(54) **INTEGRATED SYSTEM FOR SUPPLY CHAIN MANAGEMENT**

(71) Applicant: Sedapta S.r.l., 16128 Genova (IT)
(72) Inventor: CUTTICA, Benedetta, 16146 Genova (IT); GROSSO, Alberto, 16126 Genova (IT)
(74) Representative: Botti, Mario

(57) **Abstract**

The present invention relates to an integrated system for supply chain management, which comprises a data interface for gathering external data, a control tower for performing integrated simulation, analysis, and forecast on a process of the supply chain management with the gathered data and for providing new or changed plans of the supply chain, and a service repository for providing corresponding services to the control tower in order to complete the integrated simulation, analysis, and forecast.

## Description

### Technical field

The present invention relates to an integrated system for supply chain management.

A supply chain is a network of connected and interdependent organizations mutually and co-operatively working together to control, manage and improve the flow of materials and information from suppliers to end users.

The supply chain requires management. The supply chain management (SCM) encompasses the planning, organizing and controlling all activities involved in sourcing and procurement, conversion, and all logistics activities. It also includes coordination and collaboration with channel partners, which can be suppliers, intermediaries, third party service providers, and customers. In essence, supply chain management integrates and balances supply and demand within and across companies.

As large corporations continue to shift to sourcing, manufacturing and distribution across the globe, the complexity, cost and risk of their supply chains have escalated.

The key topics for a manufacturing company becomes: integrated planning and execution systems, logistics visibility, autonomous logistics, intelligent procurement and storage, spare parts management and advanced analytics, etc. The goal of these processes is to allow companies to react to Supply Chain outages and predict them, creating mathematical models of the network and what-if scenarios that help adapt activities in real time to changing conditions. Since the supply chains are increasingly long and complex, with many companies involved in the production, distribution and marketing of products (just think of e-commerce and marketplaces), to govern the traffic generated by the planning and execution processes and synchronize the demand market with the production and procurement of products, it is necessary to create a central hub commonly known as Control Tower: a digital platform that allows end-to-end visibility on all the planning phases of the supply chain and supports decision- making and execution: planning of demand, stocks, supplies, production plants and inter-company collaboration, with the ability to highlight unforeseen and critical issues and suggest alternatives.

### Prior art

Today's competitive business landscape and ever evolving customer demands are re-shaping traditional supply chains. First and foremost, globalization is increasing supply chain complexity, as physical supply chains extend their geographic scope in order to leverage low cost sourcing options and gain access to emerging markets. The movement of manufacturing facilities near to the key markets is also increasing supply chain complexity. Moreover, outsourcing is taking the supply chain outside the four walls of an organization meaning collaboration with partners becomes imperative for supply chain effectiveness. In addition to the complexities brought by globalization there is continuing pressure in most organizations to increase revenues and profit margins.

In this respect, many researches have been made to provide an efficient solution for supply chain management. For instance, WO 2015/128790 A1 discloses a method for the generation of a system and a contextualized training and performance support system for company control processes, in particular production and control processes where the method provides in combination the execution of a process management program in which the said processes are described and codified according to standard notations, gathered in a process database and organized and activated and synchronized according to pre-established sequences, that is, according to pre-established workflows of the processes and of activities relative to said processes, that is, of so-called tasks and of activities relative to said tasks, that is, steps.

As another example, GE2014A000105 discloses a process management system, which relates to a set of necessary activities to define, optimize, monitor and integrate the business process, in particular in industrial processes such as production process in order to create a process oriented to make efficient and effective the business of the company.

However, in recent years, supply chains have experienced a series of profound changes, due to various factors, such as increasingly volatile demand, involving significant seasonal effects and changing price strategies, multi-sales channels and business logic differentiated by channel, complexity and customization of products caused by market segmentation and continuous innovation, high product quality standards, more attention to the green economy, focus on the profits of the entire value chain and on the efficient use of technological assets, and distribution of information and its sources.

In order to remain competitive under the above circumstances, companies should be able to understand, analyze, manage and respond better and promptly to the variability in their supply chains. Only through an advanced control tool, such as a control tower approach, is it possible to provide company decision makers with alarms, Key Performance Indicators or KPIs, reports and details, to allow users to identify and be notified of possible critical issues in business processes.

In particular, cause and effect analysis, and what-if simulations are thus used to allow decision makers to take effective corrective actions, and to respond quickly to critical issues.

The known solutions do not have an integrated simulation and analysis environment that allows easy selection and configuration of the services necessary for the completion of processes, their control, and continuous monitoring of critical issues. To date it is cumbersome to be able to link an input configuration of a process with the outputs of the process itself, and thus carry out the needed cause and effect analyzes in an effective manner.

Other known solutions are available only tied to single specific product that should be purchased and well analyzed and understood in order to obtain the needed data and reports. In these cases, information sharing and collaboration are not efficiently implemented.

Therefore, the technical problem at the basis of the present invention is that of providing an integrated control tower environment, through which the key factors that denote the evolution of the supply chain are achieved.

### Summary of the invention

An embodiment of the present disclosure relates to an integrated system for supply chain management, comprising:
a data interface for gathering external data;
a control tower for performing integrated simulation, analysis, and forecast on a process of the supply chain management with the gathered data and for providing new or changed plans of the supply chain; and
a service repository for providing corresponding services to the control tower in order to complete the integrated simulation, analysis, and forecast.

According to the embodiment of the present invention, wherein the control tower comprises:
a configuration module including:
   a process configuration submodule for configuring a service related to an experiment in the process, and wherein the service is selectable from the service repository; and
   an experiment management submodule for configuring an input data necessary to perform the service, defining a scenario to be simulated, and establishing a link among the scenario, the input data, the service configured in the process configuration submodule, and a result of the experiment; and
an execution module including:
   a process orchestration submodule for modelling a flow of various activities associated with the supply chain management;
   a performance support submodule integrated with tasks of the process for guiding the various activities; and
   an analysis dashboard submodule for monitoring and controlling Key Performance Indicators (KPIs) of the process of the supply chain management.

According to the embodiment of the present invention, the process configuration submodule may be further used for creating and configuring user interfaces.

According to the embodiment of the present invention, the process configuration submodule may be further used for defining links, execution flows and dependencies between services.

According to the embodiment of the present invention, the input data may include a master data, a plant model, and planning parameters.

According to the embodiment of the present invention, the experiment management submodule may be further used for defining the optimization criteria, the KPIs and reports associated with the experiment.

According to the embodiment of the present invention, the data interface may be used to interface with an external data source and perform extract, transform, and load (ETL) of the external data from the external data source.

According to the embodiment of the present invention, the process orchestration submodule may be further used for starting and controlling an experiment activated in the experiment management submodule.

According to the embodiment of the present invention, the KPIs of the supply chain management may be monitored and controlled by means of dashboards and reports.

According to the embodiment of the present invention, the control tower may further provide for decision support in which multiple simulations of scenarios associated with the supply chain management are performed, KPIs of different experiments are compared with one another through dashboards and reports defined in the experiment management submodule, and a decision is generated and/or applied with the support of the simulation.

According to the embodiment of the present invention, the integrated system may further comprise a smart manager module for intervening in the generation and/or application of the decision in a proactive manner.

According to the embodiment of the present invention, the smart manager module may be based on artificial intelligence and machine learning.

According to the embodiment of the present invention, the smart manager module may be used to simulate changes in the different plans of the supply chain.

According to the embodiment of the present invention, the different plans simulated by the smart manager module may be subjected to a validation step and further changes, if needed, before being send to the control tower.

According to the embodiment of the present invention, the smart manager module may include an anomaly detection submodule for identifying and/or forecasting an abnormal condition in the process and generating a corresponding alarm.

According to the embodiment of the present invention, the various activities associated with the supply chain management may be performed with related software tools.

According to the embodiment of the present invention, the service repository may include a cloud-based architecture.

According to the embodiment of the present invention, the control tower may be configured to:
- generate or change a production plan of one or more products on the basis of gathered data;
- generate or change corresponding stock orders;
- generate or change replenishment plans of different materials used in the production of the one or more products involved in the new or changed production plans;
- change the priority of production orders of other products not involved in the new or changed production plans;
- generate corresponding replenishment orders so as to restock the one or more products involved in the new or changed production plans; and
- generate or change a selling plan in view of the now stocked one or more products involved in the new or changed production plans so as to speed up the selling of the same.

According to the embodiment of the present invention, the control tower may be further configured to:
- generating a new production plan taking into account the changes performed, in particular the already produced one or more products involved in the new or changed production plans and the correspondingly used materials to be still resupplied;
- generating a new warehouse management plan in view of the one or more products involved in the new or changed production plans already produce and to the material needed for the new production plan; and
- sending the new production plan to the different production lines involved therein with corresponding orders for the production workers.

According to the embodiment of the present invention, the different plans of the supply chain may include at least one workflow of actions being performed by different areas of the supply chain.

Features and advantages of the present invention will be disclosed with reference to the enclosed drawings relating to an indicative and a nonlimiting implementation example.

### Brief description of the drawings

FIG. 1 schematically shows an exemplary block diagram of an integrated system for supply chain management according to an embodiment of the present invention.
FIG. 2 schematically shows a detailed structure diagram of the integrated system for supply chain management according to the embodiment of the present invention.
FIG. 3 schematically shows a detailed structure diagram of data and result exchange in the integrated system for supply chain management according to the embodiment of the present invention.
FIG. 4 schematically shows a detailed structure diagram of an experiment manager implemented by the integrated system for supply chain management according to the embodiment of the present invention.

### Detailed description

Supply chain control towers continue to evolve from tools that deliver visibility almost exclusively to solutions that provide capabilities like collaboration with trading partners and functionality that enables supply chain planners to automate processes and controls. While visibility is still valuable, especially when solutions integrate data from multiple disparate systems providing the highly sought-after single version of the truth, the day-to-day management of the supply chain offers room for improvement. Leading vendors allow users to set parameters to elements of their supply chains, such as inventory levels and replenishment plans, and then leave the tool to make adjustments when issues arise. Additionally, vendors are providing capabilities that help enterprises work with multiple tiers of trading partners, manufacturers, transportation and logistics providers, and customers to better coordinate their operations.

The evolution of control towers has gone through multiple phases with an additional phase on the horizon. Visibility, actionability, collaboration, and automation have been the progression control towers have taken as vendors have matured their capabilities and extended the value they deliver. With their foundation in providing visibility across multiple areas of the enterprise that were traditionally siloed, control towers moved to phase two by extending levers to users, allowing them to make changes to correct for issues that were previously invisible to supply chain managers.

Once real-time visibility and the ability to take corrective action were established, the third phase of control towers began to arise due to so much of an enterprise's supply chain data residing outside its four walls. Solutions now deliver collaboration tools that help supply chain managers coordinate with multiple tiers of trading partners, suppliers, and third-party logistics providers, giving the enterprise the ability to affect what was traditionally outside its control upstream and downstream.

Lastly, to bring additional efficiency to the day-to-day management of the supply chain, vendors are bringing tools to market that automate many of the corrective actions that would otherwise have required human intervention. For example, a customer can set the rules for replenishment that can be automatically triggered when inventory drops below a defined threshold, generating purchase orders and logistics to avoid stock-outs. By reducing the level of human intervention required, vendors are allowing supply chain managers to divert their attention to more value-add tasks rather than daily maintenance of exceptions.

The latest phase of control towers builds on the automation tools by letting machine learning examine historical data of how the supply chain has operated to offer insights on where rules and thresholds can be reset. Machine learning can also be deployed to make suggestions to users, such as an alternative replenishment schedule, calculating the relative impact on key performance indicators (KPIs) compared with the original supply plan.

Additionally, vendors are working on capabilities that provide prescriptive actions based on anticipated issues that could impact the supply chain before they transpire. For example, by drawing on third-party data streams, solutions will be able to automatically connect an upcoming weather system like a hurricane to how it will impact shipping lanes and goods in transit, giving users the opportunity to find alternative sourcing solutions or alert the customer to the possible order delay. The capabilities rely on in-memory computing power and integration of data beyond the myriad of siloed systems within an enterprise.

On the collaboration front, vendors are working on intercompany orchestration as the next generation of control tower collaboration. Rather than limited to multi-enterprise data sharing, an orchestration solution would give the enterprise execution control of its value chain from end to end. With the ability to execute across multiple tiers of trading partners, enterprises will be able to better manage inventory, orders, shipment plans, and forecasts.

Though still underdeveloped in some respects, it is clear from vendor roadmaps that this level of coordination and automation is not far away and would represent the next step for control tower solutions overall. Customers have just started to leverage the wealth of data within their supply chains that could provide insights on how to operate more efficiently. The relative accessibility of these data and their ability to be integrated as a barrier continues to fall with more companies opting for cloud deployments and software-as-a-service delivery models. As these trends usher in the next generation of control tower solutions, vendors will be able to differentiate more on the quality of their analytics and the value their machine learning or artificial intelligence delivers.

Under this circumstance, the present invention is made to provide an integrated system for the supply chain management, which is also an integrated control tower environment, through which to respond to the key factors that denote the evolution of the supply chain.

In its more general form, the integrated system for the supply chain management is configured to constantly monitoring an industrial process.

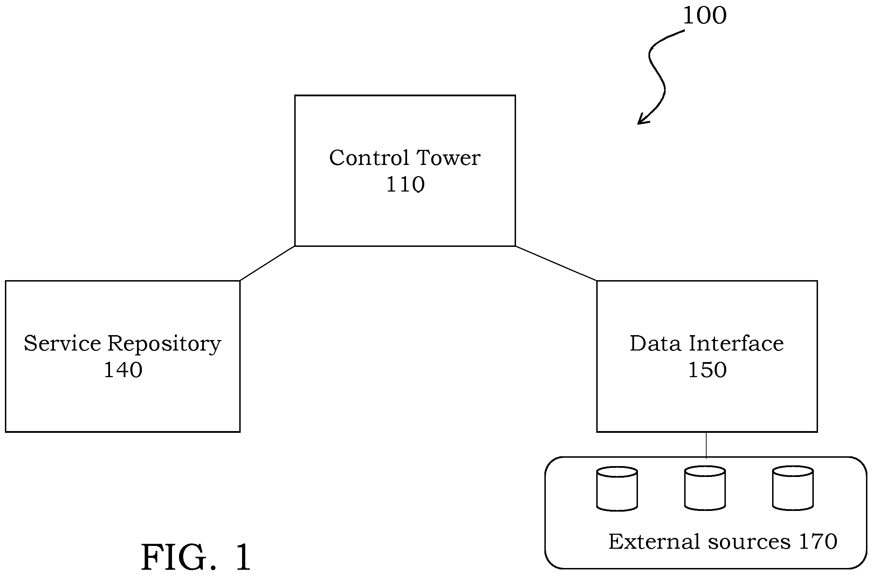

FIG. 1 shows an exemplary block diagram of an integrated system 100 for supply chain management according to an embodiment of the present invention.

As shown in FIG. 1, the integrated system 100 includes a control tower 110, a service repository 140, and a data interface 150.

According to the embodiment of the present invention, the data interface 150 is used for gathering external data. In the embodiment of the present invention, the external data is gathered from at least one external data source, preferably with several external data sources 170. The data interface 150 is used to interface with the external data sources and perform extract, transform, and load (ETL) of the external data from the external data sources 170.

According to the embodiment of the present invention, the control tower 110 is used for performing integrated simulation, analysis, and forecast on a process of the supply chain management with the gathered data from the data interface 150. The present invention is in the context of company processes. As is also known in the art, manufacturing is evolving from a "product centered" approach towards a "process centered" approach. A process may include various activities to be performed by different departments of a company.

As will be clear in the following description, the control tower 110 allows the integrated system 100, for instance, to track deliveries in real time, so that the delivery process becomes more efficient. In this aim, data are gathered also from sensors of the deliveries path, so as to provide the control tower 110 with real time data to be processed. It is in fact well known that, in the last-mile delivery, there are challenges like lack of visibility, allocation of drivers and speed as well as inefficiencies that need to be overcome.

The integrated system 100 provides for a synergic exchange of data which allows to synchronize and coordinate all stakeholders in a process to efficiently conduct a specific process activity, in particular between a process orchestration, a management unit comprising the Sales and Operation Planning (S&OP) and the Manufacturing operations management (MOM) and the control tower 110, so as to generate the best Enterprise Resource Planning (ERP) of a process on the basis of a real time simulation of such a process.

Moreover, as will be clear in the following description, the integrated system 100 is configured to automatically perform analysis actions, also in a forecasting manner, aimed to monitor the general status of a company system, as a whole, as well as to generate suitable executive workflows able to provide specific instructions to the different elements composing the control tower 110.

According to the embodiment of the present invention, the service repository 140 is used for providing corresponding services to the control tower 110 in order to complete the integrated simulation, analysis, and forecast. In the embodiment of the present invention, the service repository 140 includes a cloud-based architecture.

In the embodiment of the present invention, the simulation, analysis, and forecast of the process of the supply chain management are integrated into the system 100, which can provide a more efficient way for a decision-maker to control the entire supply chain.

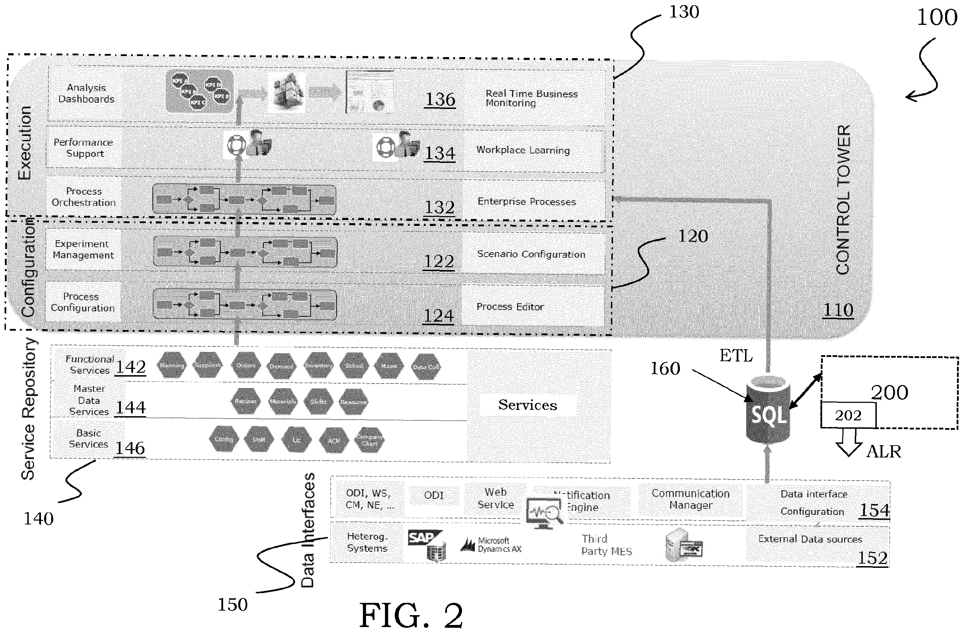

FIG. 2 shows a detailed structure diagram of the integrated system 100 for supply chain management according to the embodiment of the present invention.

As shown in FIG. 2, the integrated system 100 comprises the control tower 110 in turn including:
a configuration module 120; and
an execution module 130.

In the embodiment of the present invention, the configuration module 120 includes a process configuration submodule 122 and an experiment management submodule 124. In the embodiment of the present invention, the process configuration submodule 122 is used for configuring a service related to an experiment in the process, and wherein the service is selectable from the service repository 140.

The service repository 140 according to the embodiment comprises functional services 142, master data services 144 e basic services 146.

In this way, according to the embodiment of the present invention, a process can be selected and configured when performing simulation. Furthermore, data for driving the process can also be configured in the integrated system 100 for supply chain management of the present invention.

In the embodiment of the present invention, the process is associated with corresponding services provided by the service repository 140 and the experiment management submodule 122 is used for configuring an input data necessary to perform the service, defining a scenario to be simulated, and establishing a link among the scenario, the input data, the service configured in the process configuration submodule 124, and a result of the experiment.

Suitably, the experiment management submodule 122 defines the optimization criteria, the Key Performance Indicators (KPIs) and reports to associate to an experiment and the process configuration submodule 124 generates and configures a user interface.

According to the embodiment of the present invention, subscription of services to be used within a process for simulating the experiment can be performed through the process configuration submodule 124. In the embodiment of the present invention, the process configuration submodule 124 is used to configure services related to the experiment in the process, and define the links and dependencies between services.

Moreover, according to the embodiment of the present invention, the experiment management submodule 122 is used for configuring an input data necessary to perform the service, and wherein the input data includes a master data, a plant model, planning parameters. The input data is associated with a scenario to be simulated and parameters thereof.

In the embodiment of the present invention, the execution module 130 includes a process orchestration submodule 132, a performance support submodule 134, and an analysis dashboard submodule 136. In the embodiment of the present invention, the process orchestration submodule 132 is used for modelling a flow of various activities associated with the supply chain management. In the embodiment of the present invention, the performance support submodule 134 is integrated with the process tasks for guiding the various activities. According to the embodiment of the present invention, the various activities associated with the supply chain management are performed with related software tools. In the embodiment of the present invention, the analysis dashboard submodule 136 is used for monitoring and controlling Key Performance Indicators (KPIs) of the process of the supply chain management.

The control tower 110 of the integrated system 100 of the present invention thus allows a collaborative and profitable management of demand, wherein advanced simulations and forecast models can be applied to the entire value chain. In the control tower 110 of the present invention, the introduction of a new product and its transfer in logistics, inventory and labor operations are continuously simulated.

The control tower 110 of the present invention is connected to the data interface 150, being used to interface with the external data sources and perform extract, transform, and load (ETL) of the external data from the external data sources. According to the embodiment, the data interface 150 comprises an external data sources connection module 152 and a data interface configuration module 154 and provides ETLs to the control tower 110 suitably stored in a database 160.

In the integrated system for supply chain management of the present invention, KPIs and presentation thereof can be defined by a user, and the user can also orchestrate simulations and processes. The progress of simulations and processes can be checked in real time by means of KPIs. Corrective actions on processes are also allowed.

In the embodiment of the present invention, the process orchestration submodule 132 is further used for starting and controlling an experiment activated in the experiment management submodule 122.

In the embodiment of the present invention, the analysis dashboard submodule 136 is further used for real time business monitoring, and the KPIs of the supply chain management is monitored and controlled by means of dashboards and reports. Furthermore, an alarm can be generated when an abnormal situation exists.

According to the embodiment of the present invention, the control tower 110 is further used for decision support in which multiple simulations of scenarios associated with the supply chain management are performed, KPIs of different experiments are compared with one another through dashboards and reports defined in the experiment management submodule 122, and a decision is generated and/or applied with the support of the simulation.

In the embodiment of the present invention, the integrated system 100 for supply chain management may further comprises a smart manager module 200, which is configured to intervene in the generation and/or application of the decision in a proactive manner. According to the embodiment of the present invention, the smart manager module 200 is a software agent that models a virtual manager who can also be involved in decision-making processes in a proactive way. Suitably, the smart manager module 200 operates as an entry point for the invocation of artificial intelligence (AI) and machine learning (ML) algorithms that have multiple objectives.

In particular, the artificial intelligence (AI) and machine learning (ML) algorithms are used to perform activities automatically, which can speed up the process of the supply chain management.

In the embodiment of the present invention, the smart manager module 200 further includes an anomaly detection submodule 202 for identifying and/or forecasting an abnormal condition in the process and generating a corresponding alarm ALR. According to the embodiment of the present invention, the smart manager module 200 can send related alarm notifications to both users and IT systems and, in some cases, activate remediation actions/processes to resolve or mitigate the damage detected. In addition, the smart manager module 200 can optimize planning parameters in multi-simulation scenarios.

In the embodiment of the present invention, the smart manager module 200 is further able to iteratively launch multiple simulations in the execution module 130 of the control tower 110 of the integrated system 100, and the scenario that best meets the needs of a physical user in cooperation can be selected through optimization techniques of the execution context of the single algorithm (parameters and data).

According to the embodiment of the present invention, the smart manager module 200 can perform multi-criterion optimization of production planning, inventory control, production scheduling, etc. and is able to take into account different business areas from the fulfillment of customer orders, to the management of warehouse stocks, and to production.

In particular, the smart manager module 200 is used to simulate changes on the different plans of the supply chain, that are then provided to the control tower 110 and subjected to a validation step and further changes, if needed.

In this way, the changes on the different production plans are optimised and the control tower 110 is used to:
- generate or change the production plan of one or more products on the basis of the gathered data;
- generate or change corresponding stock orders;
- generate or change replenishment plans of the different materials used in the production of the one or more products involved in the new or changed production plans;
- change the priority of the production orders of other products not involved in the new or changed production plans;
- generate corresponding replenishment orders so as to restock the one or more products involved in the new or changed production plans; and
- generate or change a selling plan in view of the now stocked one or more products involved in the new or changed production plans so as to speed up the selling of the same.

Subsequently, the control tower 110 provides for:
- generating a new production plan taking into account the changes performed, in particular the already produced one or more products involved in the new or changed production plans and the correspondingly used materials to be still resupplied;
- generating a new warehouse management plan in view of the one or more products involved in the new or changed production plans already produce and to the material needed for the new production plan; and
- sending the new production plan to the different production lines involved therein with corresponding orders for the production workers, such orders comprising production workflows, new setups and corresponding maintenance plans.

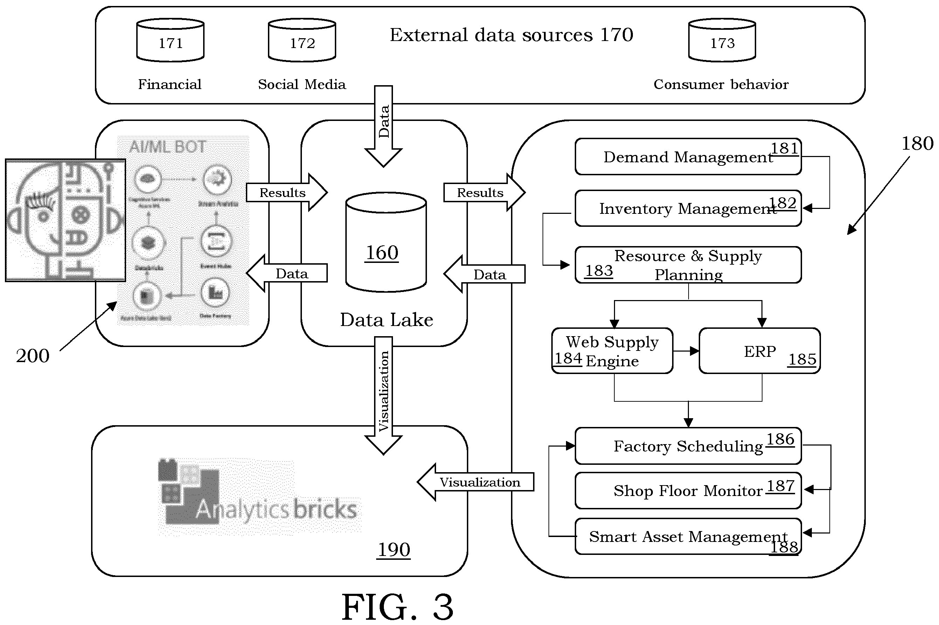

The gathering of data and distribution of the results is shown in greater detail in FIG. 3. In particular, the database 160 is a data lake being fed by the external data sources 170 and connected to the smart manager module 200 as well as to a management unit 180 comprising the Sales and Operation Planning (S&OP) and the Manufacturing operations management (MOM).

More particularly, the management unit 180 comprises a demand management 181 connected to an inventory management 182 in turn connected to a resource & supply planning 183. Moreover, the resource & supply planning 183 is connected to a web supply engine 184 and to an Enterprise Resource Planning (ERP) 185.

The management unit 180 further comprises a factory scheduling 186 connected to the web supply engine 184 and to the ERP 185 as well as to a shop floor monitor 187 and to a smart asset management 188.

Finally, the management unit 180 comprises a visualization block 190, receiving data from the management unit 180 and from the data lake 160.

In this way, the control tower 110 of the integrated system 100 according to the embodiment of the invention receives duly synchronized data from all the players in the supply chain, in a real time manner, and is able to provide the ERP of a process on the basis of a real time simulation of the same.

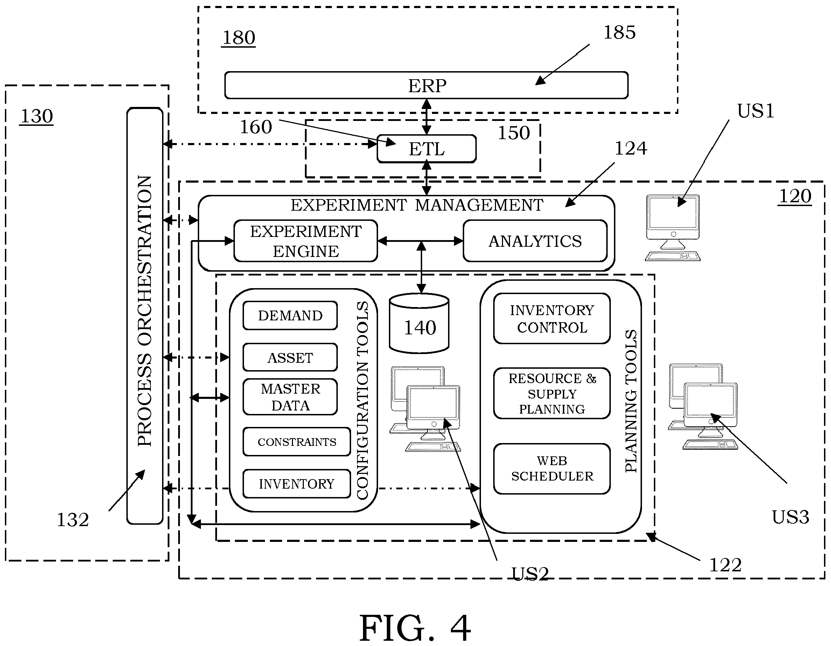

An experiment manager service being provided by the integrated system 100 according to the embodiment of the invention is shown in FIG. 4.

In particular, in order to implement the experiment manager service, the integrated system 100 uses the process orchestration submodule 132 of the execution module 130 of the control tower 110 to exchange data and instruction with the configuration module 120, and in particular with its process configuration submodule 122 and experiment management submodule 124.

The configuration module 120 is connected to the data interface 150, in turn connected to the date lake 160 with provides the ETLs and to the management unit 180 which provides the ERP 185.

The process configuration submodule 122 includes configuration tools dealing with data relating to demand, asset, master data, constraints and inventory as well as planning tools dealing with data relating inventory control, resource & supply planning and a web scheduler.

The experiment management submodule 124 comprise an experiment engine and an analytics block, in turn connected to the service repository 140.

Moreover, the experiment manager service may comprise web user interface for a user US1 which is thus allowed to connect to the analytics block for reporting. The web user interface may be embedded in the process orchestration submodule 132 and interfaced with input data sources such as the ERP 185.

Other interfaces may be provided for users US2 and US3 dealing with the configuration and planning tools, respectively.

In this way, the experiment management submodule 124 is able to help the users to configure and tag under scenarios of the configuration tools and to tag simulation results on the basis of a comparison with the results of the analytics block.

Suitably, in the embodiment of the present invention, the business processes and the control tower are integrated in the system 100 in order to monitor the business activities and analyse and implement the decision-making processes. In addition, the ML and AI techniques are used for automatic analysis of data and processes, and the smart manager module is provided for assisting in decision-making.

According to the embodiment of the present invention, the critical issues can be resolved proactively thanks to greater visibility on the key factors of processes and their orchestration, the reaction times can be reduced thanks to real-time functionalities, the decision-making throughout the supply chain can be improved, the inventory costs can be reduced thanks to the integration of demand planning, inventory planning and capacity planning services, and the level of customer service can be improved with efficient and timely management of alarms and exceptions.

The following is examples where the integrated system 100 for supply chain management is applied. It should be noted that the examples are provided for illustration only, but not to limit the scope of the present invention.

### Example 1: Strategic Planning and Budgeting

In this example, one or more demand scenarios, one or more productive asset scenarios, and one or more scenarios regarding master data and technical data (cycles and Bill of Material (BOM)) are defined; simulation scenarios are formed based on the scenarios defined previously, and a combination thereof is also defined; a plan of simulation experiments is generated by the smart manager module automatically or manually; scenario planning simulations are performed with the support of the smart manager module 170 automatically and with the algorithms of the necessary application modules; the input characteristics and results can be saved and retrieved; and analyzes and comparisons on the simulated scenarios can be performed automatically through the smart manager module 170.

The sales analysis and/or sales plan are used to generate two different demand scenarios DM1 and DM2. The inventory control (IC) module is used to define two configurations of replenishment and stock policies IC1 and IC2. Three scenarios relating to production assets AP1, AP2, and AP3 are generated. Two scenarios are generated on master data MP1 and MP2. The R&SP production planning module is used to define two planning heuristics RS1 and RS2. A scenario simulation plan is generated, and an example scenario is SC1 = DM1 + IC1 + AP3 + MP2 + RS1. The simulation for scenarios defined in the simulation plan is launched. The simulation includes the launch of IC to obtain net production demand, which is then transmitted to RS&P for capacity planning. The results can be checked through the control tower analytics report.

### Example 2: Raw Material Managing

Largely used in the Food & Beverage industry is the management of the raw materials approaching their deadline. In particular, such an industry is often compelled to deal with the presence of material approaching their expiration or sell-by date without a planned production plan that would allow their use in due course.

This problematic situation can have different causes, such as:
- a forced change in the production plan, for instance tied to block or malfunctioning of a production line;
- changes/non-fulfilment of orders from a supplier, leading to cancelation of deliveries or changes of the number of delivered items;
- changes of client orders, leading to modifying the priorities into the production plan; or
- new planning due to the company policy which establishes different material buying strategies with respect to an already confirmed production plan; for instance, raw materials are bought in advance to be always prepared for new clients order, in the approach so called demand driven Materials Requirements Planning (MRP).

Advantageously according to the present invention, the smart manager module 200 of the integrated system 100 periodically, and in view of a change of the production plan, evaluate the forecast of raw material use, with respect to the available amounts, taking into account further replenishments and generate suitable indexes tied to the expiration dates of the raw materials, in term of volumes of discharged materials and economic value of the stock.

Starting from this analysis and forecasting made by the smart manager module 200, the control tower 110 then implements the changes to be made at least in the production plan, in the stoking with the different purchases to be made and in the marketing and seller plan, so as to enhance the industry revenues starting from a current situation.

It should be emphasises that the actions established by the control tower 100 due to the results provided by the smart manager module 200 impact on different industrial areas.

For instance, considering a food, such as basil, as a raw material being close to its expiration date, the control tower 110 provides for:
- initiating the production of a product using such a basil, for stoking purposes, taking into due account the other materials being needed to obtain such a product as well as the amount of basil to be used by establishing a new production plan for the selected basil-based product; alternatively, an already running production plan could be changed in order to increase the production of such a basil-based product (for instance, a Pesto sauce);
- changing the priority of the production orders of other products not needing the basil, taking into account delivery failure penalties, if any;
- changing the marketing plan so as to promote the basil-based products and to be able to consume the stocked products in due time, particularly avoiding that also the basil-based products come close to their expiration dates, causing an even greater loss of money; and
- changing the replenishment plan of all materials involved in the production of the basil-based products, providing new purchasing orders while taking into account a reduced need of such basil-based products in the near future (due to the already provided ones).

The above indicated actions could be performed for each or more than one raw material close to its expiration date.

Advantageously, the smart manager module 200 simulates the above indicated changing on the different plans, that are then provided to the control tower 110 and subjected to a validation step and further changes, if needed. For instance, a production plan relating to a different not basil-based product could be still run in view of different parameters, such as the priority of the client, stopping another different production plan in order to run the one foreseen for the basil-based products.

The further changes on the different production plans, as well and on the corresponding marketing and replenishment plans, can be still be optimised thanks to the simulation performed by the smart manager module 200.

After a final validation step, the control tower 110 provides for:
- creating stock orders as ERP;
- changing the replenishment plans of the different materials used in the production of the basil-based products;
- generating corresponding replenishment orders so as to restock the same;
- generating a new production plan taking into account the changes performed, in particular the already produced basil-based products and the correspondingly used materials to be still resupplied;
- generating a new distribution plan for the movement of the material between the warehouses with corresponding orders for the warehouse workers or in general new warehouse management plans;
- sending the new production plan to the different production lines involved therein with corresponding orders for the production workers, such orders comprising production workflows, new setups and corresponding maintenance plans;
- changing the selling plan, for instance establishing a promotion campaign for the stocked basil-based products and subsequent marketing and selling actions.

The smart manager module 200 and the control tower 110 of the integrated system 100 according to the present invention can be also used in different yet similar scenarios, still impacting several industry areas, for instance in case of a short-term selling opportunity, whose acceptance could greatly disturb a currently running production plan.

In such a scenario, the smart manager module 200 is used to simulate the different changes to be made to the different plans in order to meet the requirements of such a short-term selling opportunity and, in case of positive result in term of money gain, to produce the new plans to be implemented by the control tower 110, in a similar way as above described with reference to a scenario involving raw material close their expiration dates.

Although specific examples have been illustrated and described herein, those of ordinary skill in the art will appreciate that an arrangement to achieve the same results can be substituted for the specific embodiments shown. This disclosure is intended to cover adaptations or variations of one or more embodiments of the present disclosure. It is to be understood that the above description has been made in an illustrative fashion, and not a restrictive one. The scope of one or more examples of the present disclosure should be determined with reference to the appended claims, along with the full range of equivalents to which such claims are entitled.

## Claims

1. An integrated system (100) for supply chain management, comprising:
a data interface (150) for gathering external data;
a control tower (110) for performing integrated simulation, analysis, and forecast on a process of the supply chain management with the gathered data and for providing new or changed plans of the supply chain; and
a service repository (140) for providing corresponding services to the control tower (110) in order to complete the integrated simulation, analysis, and forecast.

2. The integrated system (100) for supply chain management of claim 1, wherein the control tower (110) comprises:
a configuration module (120) including:
a process configuration submodule (122) for configuring a service related to an experiment in the process, and wherein the service is selectable from the service repository (140); and
an experiment management submodule (124) for configuring an input data necessary to perform the service, defining a scenario to be simulated, and establishing a link among the scenario, the input data, the service configured in the process configuration submodule (122), and a result of the experiment; and
an execution module (130) including:
a process orchestration submodule (132) for modelling a flow of various activities associated with the supply chain management;
a performance support submodule (134) integrated with tasks of the process for guiding the various activities; and
an analysis dashboard submodule (136) for monitoring and controlling Key Performance Indicators of the process of the supply chain management.

3. The integrated system (100) for supply chain management of claim 2, wherein the process configuration submodule (124) is further used for creating and configuring user interfaces.

4. The integrated system (100) for supply chain management of claim 2, wherein the process configuration submodule (124) is further used for defining links and dependencies between services.

5. The integrated system (100) for supply chain management of claim 2, wherein the input data includes master data, a plant model, and planning parameters.

6. The integrated system (100) for supply chain management of claim 2, wherein the experiment management submodule is further used for defining the optimization criteria, the Key Performance Indicators and reports associated with the experiment.

7. The integrated system (100) for supply chain management of claim 2, wherein the data interface (150) is used to interface with external data sources (170) and perform extract, transform, and load (ETL) of the external data from the external data sources (170).

8. The integrated system (100) for supply chain management of claim 2, wherein the process orchestration submodule (132) is further used for starting and controlling an experiment activated in the experiment management submodule (122).

9. The integrated system (100) for supply chain management of claim 2, wherein the Key Performance Indicators of the supply chain management is monitored and controlled by means of dashboards and reports.

10. The integrated system (100) for supply chain management of claim 2, wherein the control tower (110) is further used for decision support in which multiple simulations of scenarios associated with the supply chain management are performed, Key Performance Indicators of different experiments are compared with one another through dashboards and reports defined in the experiment management submodule (122), and a decision is generated and/or applied with the support of the simulation.

11. The integrated system (100) for supply chain management of claim 10, further comprising a smart manager module (200) for intervening in the generation and/or application of the decision in a proactive manner.

12. The integrated system (100) for supply chain management of claim 11, wherein the smart manager module (200) is based on artificial intelligence and machine learning.

13. The integrated system (100) for supply chain management of claim 11 or 12, wherein the smart manager module (200) is used to simulate changes in the different plans of the supply chain.

14. The integrated system (100) for supply chain management of claim 13, wherein the different plans simulated by the smart manager module (200) are subjected to a validation step and further changes, if needed, before being send to the control tower (110).

15. The integrated system (100) for supply chain management of claim 11, wherein the smart manager module (200) includes an anomaly detection submodule (202) for identifying and/or forecasting an abnormal condition in the process and generating a corresponding alarm (ALR).

16. The integrated system (100) for supply chain management of claim 2, wherein the various activities associated with the supply chain management are performed with related software tools.

17. The integrated system (100) for supply chain management of claim 1, wherein the service repository (140) includes a cloud-based architecture.

18. The integrated system (100) for supply chain management of any of the preceding claims, wherein the control tower (110) is configured to:
- generate or change a production plan of one or more products on the basis of gathered data;
- generate or change corresponding stock orders;
- generate or change replenishment plans of different materials used in the production of the one or more products involved in the new or changed production plans;
- change the priority of production orders of other products not involved in the new or changed production plans;
- generate corresponding replenishment orders so as to restock the one or more products involved in the new or changed production plans; and
- generate or change a selling plan in view of the now stocked one or more products involved in the new or changed production plans so as to speed up the selling of the same.

19. The integrated system (100) for supply chain management of claim 18, wherein the control tower (110) is further configured to:
- generating a new production plan taking into account the changes performed, in particular the already produced one or more products involved in the new or changed production plans and the correspondingly used materials to be still resupplied;
- generating a new warehouse management plan in view of the one or more products involved in the new or changed production plans already produce and to the material needed for the new production plan; and
- sending the new production plan to the different production lines involved therein with corresponding orders for the production workers.

20. The integrated system (100) for supply chain management of claim 18 or 19, wherein the different plans of the supply chain include at least one workflow of actions being performed by different areas of the supply chain.
